# EUROPÄISCHE PATENTSCHRIFT

(11) **EP 1 502 494 B1**
(45) Veröffentlichungstag und Bekanntmachung des Hinweises auf die Patenterteilung: **26.09.2007**
(21) Anmeldenummer: 04017615.8
(22) Anmeldetag: 26.07.2004
(51) Int. Cl.: A01F 15/07

(54) **Vorrichtung zum Umhüllen oder Verpacken von insbesondere landwirtschaftlichen Erntegutballen**
Device for wrapping or packing in particular bales of harvested material
Appareil pour emballer en particulier des balles agricoles

(30) Priorität: 30.07.2003 DE 10334679
(43) Veröffentlichungstag der Anmeldung: 02.02.2005
(73) Patentinhaber: Maschinenfabrik Bernard Krone GmbH, 48480 Spelle (DE)
(72) Erfinder: Krone, Bernard, Dr.-Ing. E.h., 48480 Spelle (DE); Martensen, Klaus, Dr.-Ing., 48477 Hörstel (DE)

(56) Entgegenhaltungen:
- EP-A- 0 367 529
- FR-A- 2 679 105
- GB-A- 2 249 077

## Beschreibung

Die Erfindung bezieht sich auf eine Vorrichtung zum Umhüllen oder Verpacken von insbesondere landwirtschaftlichem Erntegutballen aus Heu, Stroh oder angewelktem Grüngut. Vorzugsweise bezieht sich die Erfindung auf eine, eine Presskammer umfassende landwirtschaftliche Aufsammelpresse zur Herstellung von Erntegutballen, mit einer Umhüllungs- bzw. Verpackungsmaterial aufnehmenden Wickeleinheit, der eine ein bewegliches Stellmittel aufweisende Klemmvorrichtung zur Festlegung einer Verpackungs- bzw. Umhüllungsmaterialbahn zugeordnet ist, die ein von dem beweglichen Stellmittel in eine Klemmstellung überführbares Klemmelement aufweist.

Eine Vorrichtung der eingangs genannten Art in Gestalt einer landwirtschaftlichen Rundballenpresse ist bekannt, bei der der Presskammer eine Wickeleinheit mit einem Wickeltisch und in Rotationsbewegung versetzbaren, eine Wickelrolle tragenden Wickelkörpern nachgeordnet sind, wobei ein Erntegutballen mit dem Umhüllungsmaterial durch die Wickelkörper solange umwickelt wird, bis er vollständig eingehüllt ist. Zum Festlegen der Umhüllungsmaterialbahn, insbesondere zu Beginn eines Wickelvorganges aber auch zum Festlegen der Umhüllungsmaterialbahn während eines Trenn- bzw. Schneidvorganges ist hierbei ein Klemmelement vorgesehen, das von einem Hubzylinder in seine Klemmstellung bewegt und aus dieser auch wieder herausbewegt wird. Dazu ist der jeweilige Hubzylinder gesondert anzusteuern, und zwar sowohl zur Ausübung der entsprechenden Hubbewegung, bis die Klemmstellung eingenommen ist, aber auch durch Beaufschlagung der gegensinnigen Kolbenfläche in eine Hubbewegung zurück, um die Materialbahn freizugeben. Dies ist auch in zeitlicher Hinsicht dem Wickelvorgang steuerungstechnisch anzupassen, was in der Praxis Koordinationsaufwendungen verursacht.

Die FR 2 679 105 A1 zeigt und beschreibt eine Maschine zum Umhüllen von Erntegutballen mit einem um eine vertikale Achse rotierbaren Wickeltisch und einer stationär am Rahmen der Maschine angeordneten Folienvorratsrolle. Während des Wickelvorganges wird durch die Rotationsbewegung des Wickeltisches um eine vertikale Achse Umhüllungsmaterial von der Folienvorratsrolle abgezogen und um den Erntegutballen gewickelt, wobei sich dieser auf dem Wickeltisch um eine horizontale Achse dreht. Damit am Ende des Wickelvorganges die Umhüllungsmaterialbahn durchgetrennt werden kann, weist die Maschine eine Klemmeinrichtung auf, die aus einem Klemmhebel und aus einem Anschlagelement besteht. Dieser Klemmeinrichtung ist zum Durchtrennen der Umhüllungsmaterialbahn ein Schneidmesser zugeordnet. Durch einen Hydraulikzylinder wird eine Hebelanordnung ist eine Stellung verbracht, in der der Klemmhebel mit dem Anschlagelement zusammenwirkt und die Umhüllungsmaterialbahn festhält. Die Hebelanordnung verbleibt in dieser Klemmstellung solange, bis eines der Elemente der Hebelanordnung mit einer am Rahmen der Maschine befindlichen Auflaufschräge in Eingriff gelangt und die Hebelanordnung in ihre Ausgangsstellung zurückbewegt wird. Dies geschieht aber erst, nach dem sich der Wickeltisch etwa eine dreiviertel Umdrehung weitergedreht hat. Daraus wird deutlich, dass bei dieser vorbekannten Lösung das Lösen der Klemmeinrichtung einen großen technischen Aufwand verursacht und somit eine kostspielige Lösung darstellt.

Es ist Aufgabe der vorliegenden Erfindung, eine Vorrichtung der eingangs genannten Art hinsichtlich des steuerungstechnischen Aufwandes für den Umhüllungsvorgang zu vereinfachen.

Zur Lösung dieser Aufgabe zeichnet sich die Vorrichtung zum Umhüllen oder Verpacken von insbesondere landwirtschaftlichen Erntegutballen ,die vorzugsweise eine, eine Presskammer umfassende landwirtschaftliche Aufsammelpresse für zu umhüllendes Erntegut umfasst und mit einer ein Umhüllungs- bzw. Verpackungsmaterial aufnehmenden Wickeleinheit ausgerüstet ist, bei der eine ein bewegliches Stellmittel aufweisende Klemmeinrichtung zur Festlegung einer Verpackungs- bzw. Umhüllungsmaterialbahn zugeordnet ist, die Klemmeinrichtung ein von dem beweglichen Stellmittel gegen die Kraft eines Kraftspeichers in eine Klemmstellung überführbares Klemmelement aufweist und das Klemmelement relativ zu einem den Kraftspeicher tragenden Klemmbalken bewegbar ist und eine Klemmzange ausbildet, dadurch aus, dass das Klemmelement durch den Kraftspeicher in eine, keine Klemmkraft mehr ausübende Betriebsstellung überführbar und diese keine Klemmkraft mehr ausübende Betriebsstellung nach der Rückstellung aus der Klemmstellung von dem Kraftspeicher vorgebbar ist.

Dadurch ist eine Vorrichtung geschaffen, bei der das Klemmelement nicht durch eine gesteuerte Hubbewegung des Stellmittels in eine die Hüllstoff- bzw. Verpackungsmaterialbahn freigebende Betriebsstellung zu überführen ist, da diese Bewegung durch den Kraftspeicher selbst ausgeübt werden kann. Es ist in steuerungstechnisch einfacher Weise daher möglich, nach einem bestimmten Zeitintervall nach Beginn eines Umhüllungsvorganges das Stellmittel in einen Zustand zu versetzen, dass es das Klemmelement nicht mehr in seiner Klemmstellung hält. So ist beispielsweise ein als Hydraulikzylinder ausgebildetes Stellmittel einfach drucklos zu schalten, so dass in der Drucklosstellung dieses Stellmittels der Kraftspeicher das Klemmelement zurückstellen kann in eine Betriebsstellung, in der die Hüllstoff- bzw. Verpackungsmaterialbahn nicht mehr geklemmt ist. Der Kraftspeicher hat dabei allerdings nicht nur die Aufgabe, dass Klemmelement in diese, keine Klemmkraft mehr ausübende Betriebsstellung zu überführen, sondern auch die Position des Klemmelementes nach der Rückstellbewegung aus der Klemmstellung zu bestimmen. Dies ist in baulich einfacher Weise durch eine Druckfeder zu vollziehen, so dass diese durch den Kraftspeicher vorgegebene Betriebsstellung durch den Grad der Auslenkung dieser Druckfeder vorbestimmbar ist.

Der Kraftspeicher kann während des Überführens des Klemmelementes in die Klemmstellung die entsprechende Kraft speichern, indem z.B. eine Druckfeder zusammengedrückt wird. Mit dieser gespeicherten Kraft wird das Klemmelement dann in die vorgebbare Betriebsstellung überführt, wonach die Umhüllung- bzw. Verpackungsmaterialbahn relativ locker an dem Klemmelement anliegen kann und bei Bedarf herauszuziehen ist. Die Koordination von Steuerungsaufgaben während des Umhüllungsprozesses ist damit wesentlich vereinfacht, da nur nach einem relativ kurzen Zeitintervall nach Beginn des Wickelvorganges, in dem das Umhüllungs- bzw. Verpackungsmaterial bzw. dessen entsprechende Bahnen sicher an dem zu umhüllenden bzw. zu verpackenden Erntegut festgelegt sind, das Stellmittel z.B. einfach drucklos zu stellen ist. Die sich danach ergebende Bewegung wird selbsttätig von dem Kraftspeicher eingeleitet, ohne dass weitere Steuerungsaufgaben zu erledigen sind.

Insgesamt ist mithin eine Vorrichtung zum Umhüllen bzw. Verpacken von insbesondere landwirtschaftlichem Erntegutballen zur Verfügung gestellt, die mit einem verminderten Steueraufwand auskommt und eine Umhüllungs- bzw. Verpackungsmaterialbahn in der Klemmstellung zuverlässig hält, aber auch dann wenn das z.B. als Hydraulikzylinder ausgebildete Stellmittel drucklos geschaltet wird, in einfacher Weise eine Aufhebung der Klemmwirkung und somit ein Entfernen der Folienbahn aus der Vorrichtung ermöglicht. Ein Einfädeln einer Material- bzw. Verpackungsmaterialfolie z.B. nach Ersatz einer Folienmaterialrolle ist bei der Vorrichtung nach der Erfindung auch wesentlich einfacher zu vollziehen als bei dem vorbekannten Stand der Technik.

Bevorzugtermassen ist das Klemmelement als Klemmzange ausgebildet, das mit einem Klemmbalken zusammenwirkt. Dieser Klemmbalken kann eine über Federn an diesem abgestützte Klemmschiene haben. An dem Klemmbalken ist darüber hinaus der Kraftspeicher auswechselbar festzulegen. Vorzugsweise sind das Klemmelement und im übrigen auch der Klemmbalken insgesamt so ausgebildet, dass sie nach Art eines Schnabels zu öffnen sind, wobei das Klemmelement von dem Klemmbalken hoch verschwenkt werden kann in eine Betriebsstellung, in der ein maximaler Öffnungswinkel zwischen Klemmelement und Klemmbalken vorliegt. Vorteilhafterweise ist das Klemmelement an seinem der Umhüllungs- bzw. Verpackungsmaterialbahn abgewandten Ende in einer schlitzförmigen Längsführung translatorisch beweglich geführt, so dass es bei einer Verschwenkbewegung des Klemmelementes aus einer Öffnungsstellung in seine Klemmstellung translatorisch weg bewegt werden kann, um die Zange zu schließen. Ein solches Schließen ist insbesondere dann geboten, wenn eine Hüllstoff- bzw. Verpackungsmaterialbahn aufeinander gefaltet werden soll, wobei die gefalteten Bahnabschnitte durch die Schwenkbewegung des Klemmelementes und des dazugehörigen Klemmbalkens aufeinander liegen sollen. Dieses ist auch vorteilhaft für einen nachfolgenden Trenn- bzw. Schneidvorgang, da nicht mehr die gesamte Hüllstoffbahnbreite einem Schneidwerkzeug bzw. Trennelement zuzuführen ist.

Bevorzugterweise ist auch in der Nachbarschaft des Klemmelementes ein Schneid- oder Trennelement für das Hüllstoff- bzw. Verpackungsmaterial vorgesehen, und zwar ein solches, das sich für den beabsichtigten Trenn- bzw. Schneidvorgang in die Bahn des Hüllstoff- bzw. Verpackungsmaterials verschwenken lässt.

Weitere vorteilhafte Ausgestaltungen der Erfindung ergeben sich aus weiteren Unteransprüchen, der nachfolgenden Beschreibung und der Zeichnung. In der Zeichnung zeigen:
- Fig. 1: ein Ausführungsbeispiel eines Klemmelementes mit zugehörigem Kraftspeicher in der Klemmstellung in einer perspektivischen Darstellung,
- Fig. 2: eine zu Fig. 1 analoge Darstellung in geöffnetem hochverschwenktem Zustand des Klemmelementes, und
- Fig. 3: eine Einzelteildarstellung der in den Fig. 1 und 2 veranschaulichten Teile der Vorrichtung in einer auseinander gezogenen Darstellung,
- Fig.4: eine perspektivische Ansicht einer Vorrichtung zum Umhüllen und Verpacken in eine Phase vor dem Zusammenfalten und Abtrennen einer Verpackungsmaterialbahn.

In der Zeichnung sind grundsätzlich gleichwirkende Teile mit übereinstimmenden Bezugsziffern versehen. In der Zeichnung ist die allgemeine Vorrichtung zum Umhüllen bzw. Verpacken von beispielsweise landwirtschaftlichem Erntegutballen aus Gründen der besseren Übersichtlichkeit nicht dargestellt. Die dargestellten Teile sind in vielfältiger Weise nutzbar, z.B. bei landwirtschaftlichen Maschinen wie etwa landwirtschaftlichen Ballenpressen aber auch an sonstigen Gerätschaften, mit der Gut durch Umhüllungs- oder Verpackungsmaterialbahnen zu umhüllen bzw. zu verpacken sind.

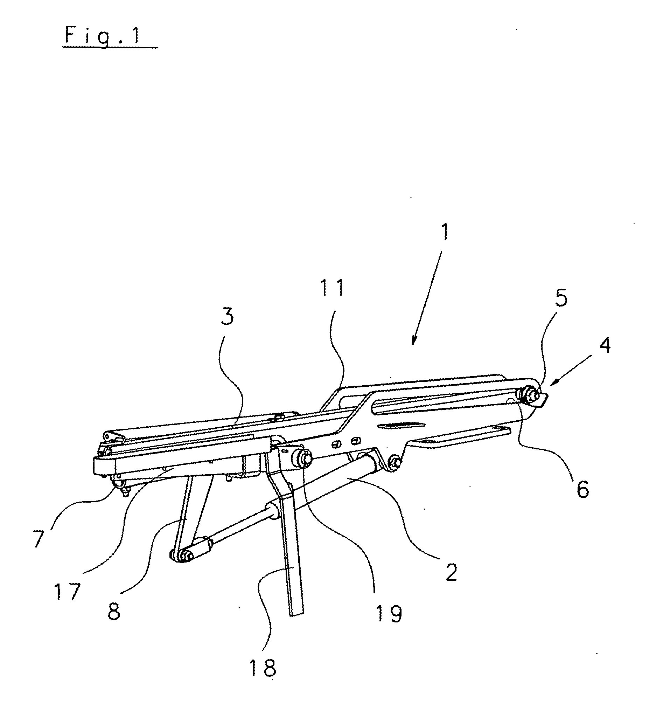

Die in den Fig. 1 bis 3 dargestellte Klemmeinrichtung 1 ist beispielsweise an einer landwirtschaftlichen Aufsammelpresse einer Presskammer nachgeordnet und an einem Wickeltisch vorgesehen, und zwar im Wirkbereich von einem oder mehreren kreisenden Wickelkörpern, so dass die Klemmeinrichtung eine Umhüllungs- oder Verpackungsmaterialbahn ergreifen kann. Die Klemmeinrichtung 1 weist in dem dargestellten Ausführungsbeispiel ein bewegliches Stellmittel 2 in Gestalt eines Hubzylinders auf. Sie umfasst ein Klemmelement 3, das an seinem hinteren Ende 4 eine Bolzenschraubverbindung 5 hat, welches in einer schlitzartigen Längsführung 6 in einem Gehäuse geführt ist, an dem auch das als Hydraulikzylinder ausgebildete Stellmittel 2 abgestützt ist.

Die Klemmeinrichtung 1 hat neben dem Klemmelement 3 noch einen Klemmbalken 7, an dem über einen Mitnehmer 8 das als Hubzylinder ausgeführte Stellmittel 2 angreift, wobei das Klemmelement 3 und der Klemmbalken 7 eine Klemmzange ausbilden. Das Klemmelement 3 ist seinerseits gabelförmig ausgebildet und wirkt mit dem Klemmbalken 7 zusammen, der seinerseits eine Klemmschiene 12 hat, die unter Zwischenschaltung von Federelementen 13 und 14 auf dem Klemmbalken auswechselbar gehaltert ist. Das gabelförmige Klemmelement 3 kann mithin die Klemmschiene 12 und bereichsweise den Klemmbalken 7 übergreifen und dazwischen ein Bahnstück aus Umhüllungs- oder Verpackungsmaterial an der Klemmschiene 12 festklemmen, wenn das als Hubzylinder ausgebildete Stellmittel 2 in seine ausgefahrene Position gebracht ist, wie dies Fig. 1 zeigt. In dieser Position ist das rückwärtige Ende 4 bzw. der Bolzen 5 des Klemmelementes innerhalb der Längsführung 6 vollständig nach hinten bewegt, so dass das Klemmelement mitsamt dem Klemmbalken 7 eine in etwa waagerechte Lage einnimmt.

An dem Klemmbalken 7 ist darüber hinaus noch ein Kraftspeicher 15 in Gestalt einer Druckfeder vorgesehen. Nach der Überführung des Klemmelementes 3 in die in Fig.1 dargestellte Klemmstellung drückt das Klemmelement 3 auf den Kraftspeicher 15 uns spannt diesen vor. Wird das Stellmittel 2 drucklos gestellt, kann unter der Einwirkung des Kraftspeichers 15 das Klemmelement 3 in eine solche Betriebsstellung anheben bzw. leicht verschwenken, dass die Klemmung des Umhüllungs- bzw. Verpackungsmaterials nicht mehr weiter fortbesteht. Dabei wird sich das Klemmelement allerdings auch nur um einen solchen Bereich anheben, wie es die Auslenkung des Kraftspeichers 15 zulässt. Danach ist das Umhüllungs- oder Verpackungsmaterial noch geführt, jedoch nicht von dem Klemmelement 3 festgeklemmt.

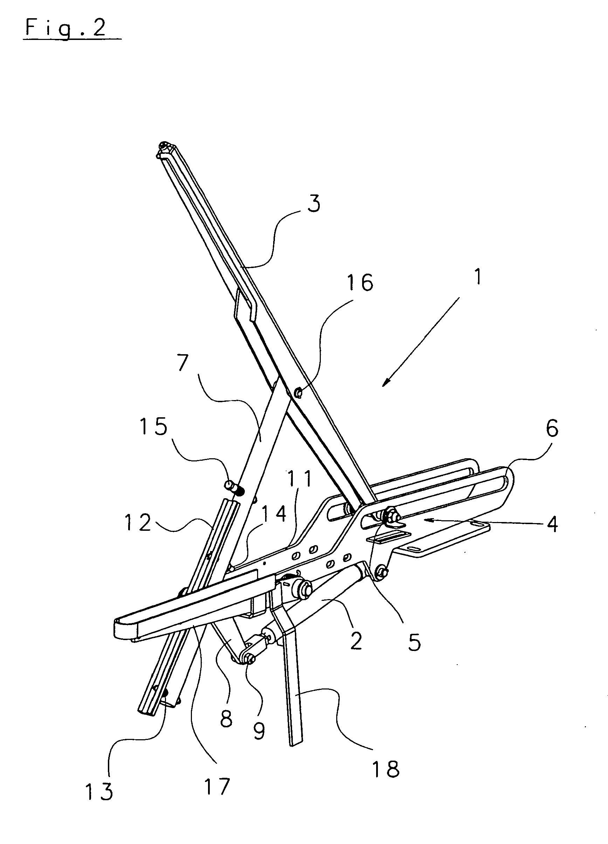

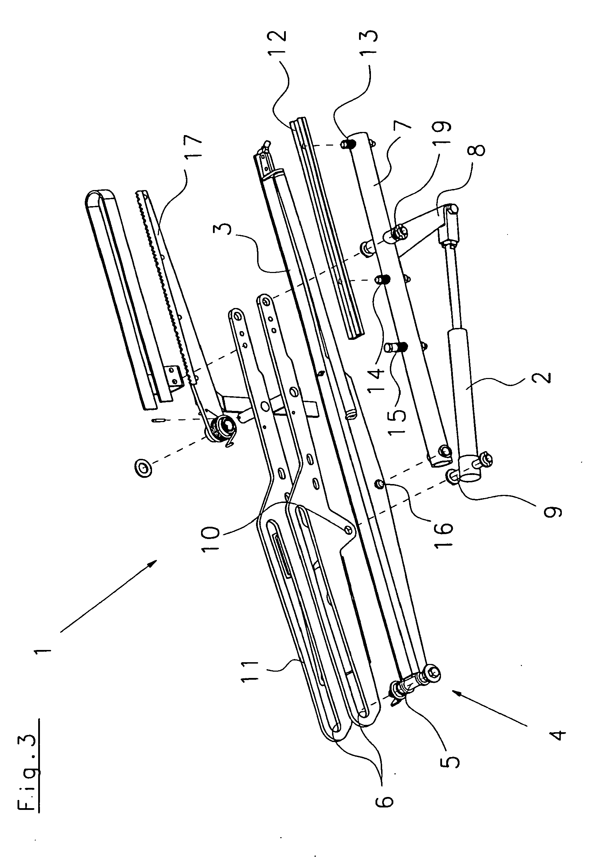

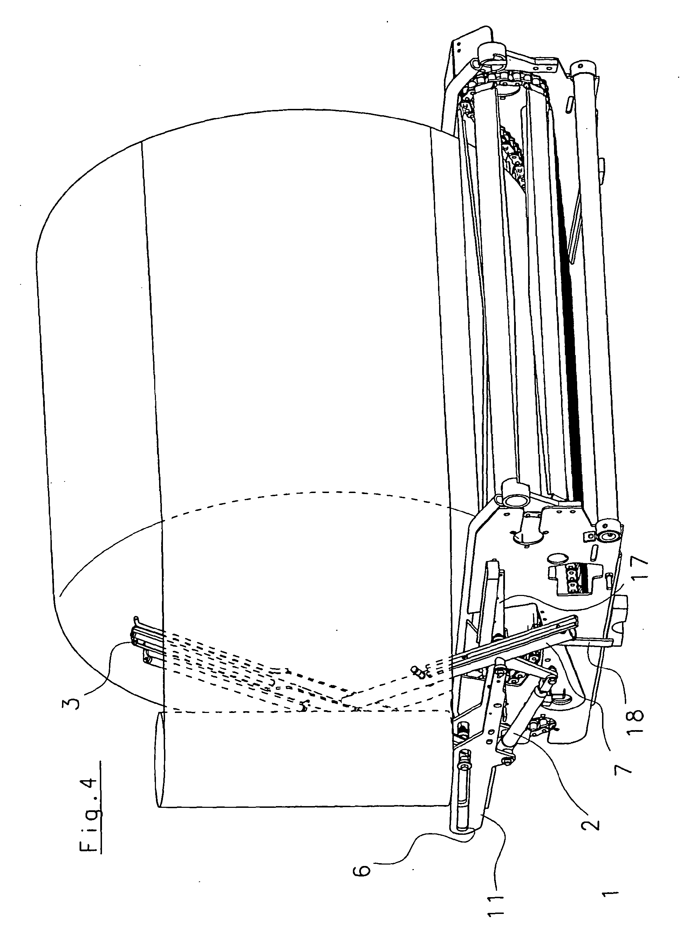

In Fig. 2 ist das als Hydraulikzylinder ausgeführte Stellmittel 2 eingefahren dargestellt und hat mithin den Mitnehmer 8 in Richtung des Stellmittels 2 bewegt, so dass aufgrund der schwenkbeweglichen Halterung durch den Bolzen 19 innerhalb des Gehäuses 11 der Klemmbalken 7 mitsamt der Klemmschiene 12, den Federelementen 13 und 14 sowie dem Kraftspeicher 15 in die hochgeschwenkt, dargestellte Öffnungsstellung verschwenkt ist. Aufgrund seiner gelenkigen Verbindung bei 16 ist das Klemmelement 3 in die hochgeschwenkte Öffnungsstellung verschwenkt, und zwar unter Heranziehung des Endes 4 bzw. des Bolzens 5 in der Schlitzführung 6. In dieser Position kann mittels dieser geöffneten Zange, gebildet durch das Klemmelement 3, und den Klemmbalken 7, ein Fangen des Umhüllungs- bzw. Verpackungsfolienmaterials erfolgen und gleichfalls während des Hindurchführens umgelegt bzw. gefaltet werden, so dass eine Folienbahn auf in etwa die Hälfte ihrer Breite oder weniger zusammengelegt ist und mithin mehrlagig nach Betätigung des Stellmittels 2 durch das Klemmelement 3 festgeklemmt werden kann. Für einen nachfolgenden Trennvorgang, teilweise wiedergegeben in Fig.4, mit Hilfe des Trenn- und Schneidmessers 17, das sich in seiner Außerbetriebsstellung in etwa parallel zum Klemmelement 3 erstreckt (sh. auch Fig. 1 und Fig. 3), wird mittels eines Hebels 18 das Schneid- und Trennelement 17 in die Umlaufbahn des Umhüllungs- bzw. Verpackungsmaterial geschwenkt, so dass das umgelegte oder gefaltete Umhüllungs- bzw. Verpackungsbahnmaterial durchtrennt bzw. so perforiert wird, dass es bei weiterer Zugbelastung reißt. Das Loslassen des Umhüllungs- und Verpackungsmaterials ist bei der vorliegenden Vorrichtung in steuerungstechnisch einfacher Weise allein dadurch zu vollziehen, dass das Stellmittel 2 drucklos geschaltet wird, wonach die nachfolgende Freigabebewegung allein durch die Auslenkung des Kraftspeichers 15 vollzogen werden kann.

## Patentansprüche

1. Vorrichtung zum Umhüllen oder Verpacken von insbesondere landwirtschaftlichen Erntegutballen, vorzugsweise eine, eine Presskammer umfassende landwirtschaftliche Aufsammelpresse für zu umhüllendes Erntegut, mit einer ein Umhüllungs- bzw. Verpackungsmaterial aufnehmenden Wickeleinheit, der eine ein bewegliches Stellmittel (2) aufweisende Klemmeinrichtung zur Festlegung einer Verpackungs- bzw. Umhüllungsmaterialbahn zugeordnet ist, wobei die Klemmeinrichtung ein von dem beweglichen Stellmittel (2) gegen die Kraft eines Kraftspeichers (15) in eine Klemmstellung überführbares Klemmelement (3) aufweist und das Klemmelement (3) relativ zu einem den Kraftspeicher (15) tragenden Klemmbalken (7) bewegbar ist und eine Klemmzange ausbildet, **dadurch gekennzeichnet, dass** das Klemmelement (3) durch den Kraftspeicher (15) in eine, keine Klemmkraft mehr ausübende Betriebsstellung überführbar und diese keine Klemmkraft mehr ausübende Betriebsstellung nach der Rückstellung aus der Klemmstellung von dem Kraftspeicher (15) vorgebbar ist.

2. Vorrichtung nach Anspruch 1, **dadurch gekennzeichnet, dass** das Klemmelement (3) von dem Kraftspeicher (15) in einer Drucklosstellung des Stellmittels (2) in seine von dem Kraftspeicher (15) vorgebbare Betriebsstellung bewegbar ist.

3. Vorrichtung nach Anspruch 1 und 2, **dadurch gekennzeichnet, dass** der Kraftspeicher (15) als Druckfeder ausgebildet ist.

4. Vorrichtung nach einem der Ansprüche 1 bis 3, **dadurch gekennzeichnet, dass** das Klemmelement (3) einenends in einer Führung (6) geführt und in dieser translatorisch bewegbar ist.

5. Vorrichtung nach einem der Ansprüche 1 bis 4, **dadurch gekennzeichnet, dass** das Klemmelement (3) von dem Stellmittel (2) in eine hochverschwenkte Öffnungsstellung und aus dieser von dem Stellmittel (2) in seine Klemmstellung überführbar ist.

6. Vorrichtung nach einem der Ansprüche 4 bis 5, **dadurch gekennzeichnet, dass** das Klemmelement (3) über den Klemmbalken (7) in die hochverschwenkte Öffnungsstellung verschwenkbar ist.

7. Vorrichtung nach einem der Ansprüche 4 bis 6, **dadurch gekennzeichnet, dass** der Klemmbalken (7) und das Klemmelement (3) schnabelförmig auf und zu bewegbar sind und dass der Klemmbalken (7) eine elastisch abgestützte Klemmschiene (12) trägt.

8. Vorrichtung nach einem der Ansprüche 4 bis 7, **dadurch gekennzeichnet, dass** das Klemmelement (3) gabelförmig ausgebildet ist und den Klemmbalken (7) bereichsweise übergreift.

9. Vorrichtung nach einem der Ansprüche 1 bis 8, **dadurch gekennzeichnet, dass** mittels des Klemmelementes (3) und des Klemmbalkens (7) bei ihrer Überführung aus der Öffnungsstellung in die Klemmstellung eine Faltung des Umhüllungs- oder Verpackungsmaterials erreichbar ist.

10. Vorrichtung nach einem der Ansprüche 1 bis 9, **dadurch gekennzeichnet, dass** an der Vorrichtung (1) ein Schneid- oder Trennelement (17) zum Abtrennen einer Umhüllungs- oder Verpackungsmaterialbahn abstützbar ist.

11. Vorrichtung nach Anspruch 10, **dadurch gekennzeichnet, dass** das Schneid- oder Trennelement (17) aus einer im wesentlichen parallel zu dem Klemmelement (3) gelegenen Ausgangsstellung in eine Schneidstellung hochschwenkbar ist.

## Claims

1. Device for wrapping or packing particularly bales of harvested agricultural material, and preferably an agricultural pick-up baler, for harvested material to be wrapped, comprising a compression chamber, having a winding unit which receives a wrapping or packing material and which has associated with it a clamping arrangement for arresting a web of wrapping or packing material, which clamping arrangement has a movable positioning means (2), the clamping arrangement having a clamping member (3) which can be transferred by the movable positioning means (2) to a clamping position in opposition to the force from a force-storing means (15), and the clamping member (3) being movable relative to a clamping bar (7) carrying the force-storing means (15) and forming a clamping pincer, **characterised in that** the clamping member (3) can be transferred by the force-storing means (15) to an operating position in which clamping force ceases to be exerted, and, following the return from the clamping position, this operating position in which clamping force ceases to be exerted can be preset by the force-storing means (15).

2. Device according to claim 1, **characterised in that**, when the positioning means (2) is in a pressure-off position, the clamping member (3) can be moved by the force-storing means (15) to its operating position which can be preset by the force-storing means (15).

3. Device according to claims 1 and 2, **characterised in that** the force-storing means (15) is in the form of a compression spring.

4. Device according to one of claims 1 to 3, **characterised in that** the clamping member (3) is guided in a guide (6) at one end and is movable in translation therein.

5. Device according to one of claims 1 to 4, **characterised in that** the clamping member (3) can be transferred to a pivoted-up position by the positioning means (2) and from this latter position to its clamping position by the positioning means (2).

6. Device according to either of claims 4 and 5, **characterised in that** the clamping member (3) can be pivoted to the pivoted-up position by means of the clamping bar (7).

7. Device according to one of claims 4 to 6, **characterised in that** the clamping bar (7) and the clamping member (3) can be moved to open and close after the fashion of a beak, and **in that** the clamping bar (7) carries a resiliently supported clamping rail (12).

8. Device according to one of claims 4 to 7, **characterised in that** the clamping member (3) is formed to be of a bifurcated shape and fits over the clamping bar (7) in a region or regions.

9. Device according to one of claims 1 to 8, **characterised in that** a fold can be made in the wrapping and packing material by means of the clamping member (3) and the clamping bar (7) when they are transferred from the open position to the clamping position.

10. Device according to one of claims 1 to 9, **characterised in that** a cutting or dividing member (17) for severing a web of wrapping or packing material can be supported on the device (1).

11. Device according to claim 10, **characterised in that** the cutting or dividing member (17) can be pivoted up from a starting position in which it is situated substantially parallel to the clamping member (3) to a cutting position.

## Revendications

1. Dispositif pour envelopper ou emballer des balles, notamment de produits agricoles récoltés de préférence par une presse collectrice, agricole, comportant une chambre de presse recevant le produit récolté à emballer, une unité d'enveloppement recevant la matière d'emballage ou d'enveloppement, ayant une installation de serrage munie de moyens d'actionnement (2), mobiles pour fixer une trajectoire de matière d'emballage ou d'emballement, l'installation de serrage ayant un élément de pincement (3) qui peut être conduit en position de pincement par actionneur (2) mobile contre la force développée par un accumulateur de force (15), et l'élément de pincement (3) est mobile par rapport à une poutre de serrage (7) qui porte l'accumulateur de force (15) et une pince de serrage,
**caractérisé en ce que**
l'élément de pincement (3) peut être mis par l'accumulateur de force (15) dans une position de fonctionnement dans laquelle il n'exerce plus de force de pincement et cette position de fonctionnement dans laquelle il n'exerce plus de force de pincement, est prédéfinie par le rappel à partir de la position de pincement réalisée par l'accumulateur de force (15).

2. Dispositif selon la revendication 1,
**caractérisé en ce que**
l'élément de pincement (3) est déplacé dans sa position de fonctionnement prédéfinie par l'accumulateur de force (15), à l'aide de l'accumulateur de force (15) dans une position hors poussée de l'actionneur (2).

3. Dispositif selon les revendications 1 et 2,
**caractérisé en ce que**
l'accumulateur de force (15) est un ressort de compression.

4. Dispositif selon l'une des revendications 1 à 3,
**caractérisé en ce que**
l'élément de pincement (3) guidé par une extrémité dans un guide (6) est mobile en translation dans celui-ci.

5. Dispositif selon l'une des revendications 1 à 4,
**caractérisé en ce que**
l'élément de pincement (3) peut être conduit par l'actionneur (2) dans une position d'ouverture basculée vers le haut et, à partir de celle-ci, par l'actionneur (2), dans sa position de pincement.

6. Dispositif selon l'une des revendications 4 à 5,
**caractérisé en ce que**
l'élément de pincement (3) peut être basculé vers le haut par la poutre de pincement (7) dans la position d'ouverture.

7. Dispositif selon l'une des revendications 4 à 6,
**caractérisé en ce que**
la poutre de pincement (7) et l'élément de pincement (3) sont mobiles dans le sens de l'ouverture et de la fermeture à la manière d'un bec et la poutre de pincement (7) porte un rail de pincement (12) appuyé élastiquement.

8. Dispositif selon l'une des revendications 4 à 7,
**caractérisé en ce que**
l'élément de pincement (3) a une forme de fourche et chevauche la poutre de pincement (7) par zones.

9. Dispositif selon l'une des revendications 1 à 8,
**caractérisé en ce qu'**
en faisant passer l'élément de pincement (3) et la poutre de pincement (7) de la position d'ouverture à la position de pincement, on réalise un pli avec la matière d'emballage et d'enveloppement.

10. Dispositif selon l'une des revendications 1 à 9,
**caractérisé en ce que**
le dispositif (1) comporte un organe de coupe ou de séparation (17) pour couper la bande de matière d'emballage ou d'enveloppement.

11. Dispositif selon la revendication 10,
**caractérisé en ce que**
l'organe de coupe ou de séparation (17) peut être basculé vers le haut en position de coupe à partir d'une position de repos pratiquement parallèle à l'élément de pincement (3).
